# FASCICULE DE BREVET EUROPEEN

(11) **EP 1 808 753 B1**
(45) Date de publication et mention de la délivrance du brevet: **22.10.2014**
(21) Numéro de dépôt: 06127193.8
(22) Date de dépôt: 27.12.2006
(51) Int. Cl.: G06F 3/033

(54) **Procédé et dispositif de traitement de données**
Verfahren und Gerät zur Datenverarbeitung
Method and device for processing data

(30) Priorité: 29.12.2005 FR 0554137
(43) Date de publication de la demande: 18.07.2007
(73) Titulaire: Orange, 75015 Paris (FR)
(72) Inventeur: Genestier, Philippe, 38570, HURTIERES (FR); Brun, Alain, 38450, LE GUA-VIF (FR); Fiori, Costantino, 38130, ECHIROLLES (FR)
(74) Mandataire: Joly, Jean-Jacques

(56) Documents cités:
- EP-A- 0 565 290
- US-A- 5 661 291
- US-A- 6 055 552
- US-B1- 6 741 871

## Description

### Domaine technique de l'invention

L'invention se rapporte au domaine du traitement de données saisies de manière séparée et plus particulièrement à celles comportant des données résultant de la saisie d'écriture sous une forme manuscrite.

### Arrière-plan de l'invention

Actuellement, il existe plusieurs moyens tels que les écrans tactiles ou les stylos électroniques permettant la saisie de texte manuscrit.

Par ailleurs, de nombreuses applications mettant en oeuvre une saisie de données manuscrites nécessitent de pouvoir associer ces données à une ou plusieurs autres informations obtenues indépendamment C'est par exemple le cas dans le secteur des transports où le bon de livraison signé par un destinataire doit pouvoir être associé au colis auquel il correspond.

Dans la technique actuelle, cette association nécessite une ressaisie de l'information d'identification à l'aide du moyen de saisie des données manuscrites ou d'un tout autre artifice, entraînant une modification de la manière de procéder et une perte de temps.

Une autre manière consiste à envoyer les données issues de différentes sources à un serveur applicatif, qui relie ces données entre elles au moyen d'une clé d'identification. Cette technique rajoute une complexité et une lourdeur dans le traitement des données.

Le document US 6 055 552 décrit un système d'enregistrement de données consistant en un bloc-notes électronique dans lequel pour écrire sur les pages on utilise un stylet, avec un numériseur produisant un enregistrement électronique des signes introduits en vue de leur stockage et de la restitution ultérieure des pages.

### Objet et résumé de l'invention

L'invention a pour but de remédier à ces inconvénients et de faciliter l'association entre les différentes données.

Ces buts sont atteints grâce à un procédé de traitement de données tel que revendiqué en revendication 1.

L'invention vise également un dispositif de communication, tel que revendiqué en revendication 5.

D'autres modes de réalisation selon l'invention sont spécifiés dans les revendications dépendantes attenantes.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 est une vue schématique d'un système de traitement de données comportant des périphériques de saisie et un dispositif de communication selon l'invention;
- la figure 2 est un exemple d'un organigramme illustrant les étapes d'un procédé de traitement de données selon l'invention; et
- la figure 3 est une vue schématique d'un mode particulier de réalisation de la figure 1.

### Description détaillée de modes de réalisation

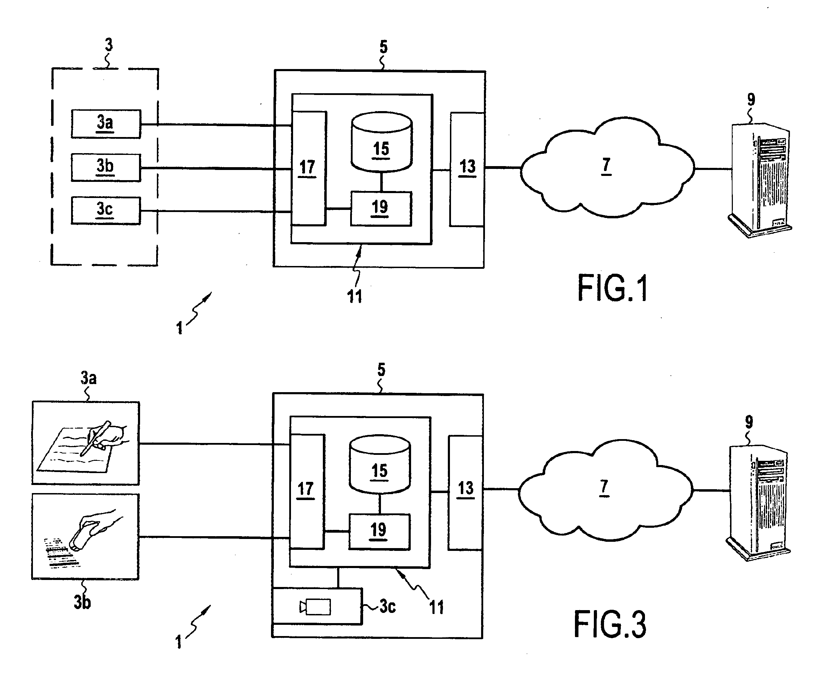

La figure 1 illustre un exemple d'un système 1 de traitement de données comportant des périphériques de saisie 3a, 3b, 3c et un dispositif de communication 5 relié par l'intermédiaire d'un réseau de communication 7 à un serveur 9 de traitement selon l'invention.

Le réseau de communication 7 peut être un réseau de télécommunication fixe ou mobile utilisé pour la transmission des données vers le serveur 9.

A titre d'exemple, les périphériques de saisie 3a, 3b, 3c peuvent comporter un moyen de saisie d'écriture sous forme manuscrite 3a, un moyen de saisie d'information d'identification 3b, un moyen d'enregistrement de photographies numériques 3c, un moyen d'enregistrement sonore ou un tout autre moyen de saisie.

Ces périphériques de saisie 3a, 3b, 3c sont reliés au dispositif de communication 5 par des liaisons filaires ou sans fil (par exemple à la norme Bluetooth) et peuvent être disposées dans un même support physique 3 (par exemple un stylo numérique intégrant un lecteur de code barre). Bien entendu, le dispositif de communication peut également intégrer tout ou au moins une partie des périphériques de saisie 3a, 3b, 3c.

A titre d'exemple, le dispositif de communication 5 peut être un terminal de du type téléphone mobile, un PDA, un ordinateur, une borne d'accès à un réseau filaire (ADSL, RTC, NUMERIS) ou sans fil (WiFi, GPRS, EDGE, UMTS, ...).

Selon l'exemple de la figure 1, le dispositif de communication 5 comporte un module d'agrégation 11 et un moyen de transmission 13. Le module d'agrégation 11 est destiné à agréger automatiquement les données numériques résultant de la saisie d'écriture sous forme manuscrite dans le périphérique de saisie 3a à d'autres données numériques saisies issues d'au moins un autre périphérique de saisie 3b ou 3c pour former des données numériques agrégées.

Par ailleurs, le moyen de transmission 13 est destiné à transmettre ces données numériques agrégées au serveur 9 de traitement par l'intermédiaire du réseau de communication 7.

Ainsi, le dispositif de communication 5 assure deux fonctions remplies chacune par un programme développé à cet effet. La première fonction est une fonction d'interface avec les périphériques de saisie 3a, 3b, 3c assurant l'agrégation des données numériques qui en sont issues. La seconde fonction est une fonction de transmission, via le réseau de télécommunications 7, des données numériques agrégées et issues des périphériques de saisie 3a, 3b, 3c vers le serveur 9 qui les traitera. Le serveur distant peut alors, uniquement se consacrer au traitement des données sans se préoccuper de l'association entre les différentes données.

En particulier, le module d'agrégation 11 comporte un moyen de stockage 15, un moyen de réception 17 et un moyen de traitement 19.

Le moyen de stockage 15 comporte des paramètres prédéterminés définissant l'événement de déclenchement, l'événement de clôture, et les données numériques à agréger. Ce moyen de stockage est constitué par exemple par une mémoire du dispositif 5,

Un fichier comprenant lesdits paramètres prédéterminés peut être téléchargé au préalable sur le dispositif de communication 5, ce fichier contenant les éléments suivants :
- des paramètres définissant l'événement déclencheur de l'agrégation, comprenant par exemple une identification de cet événement, l'identification d'une file d'attente de saisie (associée à l'un des périphériques de saisie 3a, 3b, 3c) à observer pour la détection de l'occurrence de cet événement, et/ou bien le format de fichier généré ou le format de données saisies via cette file d'attente,
- des paramètres définissant les données numériques à agréger, comprenant par exemple une identification de l'événement de fin de saisie de ces données numériques (associée à l'un des périphériques de saisie 3a, 3b, 3c), l'identification d'une file d'attente de saisie à observer pour la détection de l'occurrence de cet événement, et/ou le format de fichier généré ou le format de données saisies via cette file d'attente, et
- des paramètres définissant l'événement terminant l'agrégation, comprenant par exemple une identification de cet événement, l'identification d'une file d'attente de saisie (associée à l'un des périphériques de saisie 3a, 3b, 3c) à observer pour la détection de l'occurrence de cet événement, et/ou le format de fichier généré ou le format de données saisies via cette file d'attente.

En généralisant, l'un au moins des événements de déclenchement de l'agrégation et de clôture de l'agrégation peut être défini au moyen d'une combinaison logique (du type et/ou) des éléments suivants : identification de cet événement, identification d'une file d'attente de saisie à observer pour la détection de l'occurrence de cet événement, format de fichier généré, et format de données saisies via cette file d'attente. Ainsi l'événement de début et/ou de fin d'agrégation peut être défini comme une combinaison logique d'événements de base.

Par exemple, lorsque l'événement de début d'agrégation (respectivement de fin d'agrégation) est défini comme étant la combinaison logique "OU" de deux événements, à savoir:
- un premier événement, défini par rapport à une file d'attente, associée à un premier périphérique,
- un deuxième événement, défini par rapport à une autre file d'attente, associée à un deuxième périphérique,
   l'occurrence de l'un quelconque de ces deux événements détermine le début (respectivement la fin) de l'agrégation.

Ainsi, il est possible de faire en sorte que l'agrégation soit déclenchée quel que soit l'ordre chronologique dans lequel l'utilisateur utilise les périphériques de saisie, notamment quel que soit le périphérique utilisé en premier (ou en dernier). L'utilisateur peut donc commencer par utiliser son stylo électronique puis un deuxième périphérique ou l'inverse, les données agrégées seront envoyées automatiquement à la fin de la saisie.

L'accès aux données numériques saisies et l'observation des événements permettant de gérer le processus d'agrégation utilise les files d'attente associées à chaque périphérique de saisie. Cette méthode est particulièrement simple à mettre en oeuvre, car l'utilisateur n'a pas besoin d'effectuer d'autres actions que la saisie proprement dite, l'envoi de données résultant de l'agrégation étant effectué automatiquement suite aux opérations de saisie. Toute autre technique permettant de détecter les instants de début et de fin d'agrégation et d'obtenir les données à agréger est cependant envisageable.

Il est à noter que l'événement de déclenchement de l'agrégation, aussi bien que l'événement de clôture de l'agrégation, peut être un événement de fin de saisie de données d'une file d'attente prédéfinie ou bien être tout autre événement détectable comme par exemple un appui de touche sur un clavier du dispositif 5.

Par ailleurs, le moyen de réception 17 est une interface d'entrée communiquant avec les périphériques de saisie et destinée à recevoir les données numériques saisies dans les périphériques de saisie 3a, 3b et 3c. Bien entendu, le moyen de réception 17 n'est pas indispensable pour les périphériques de saisie qui sont intégrés dans le dispositif de communication 5.

En outre, le moyen de traitement 19 est destiné à agréger les données reçues entre un événement de déclenchement et un événement de clôture selon les paramètres prédéterminés.

Ainsi, une application ou un programme d'ordinateur comportant des instructions de code pour la mise en oeuvre du procédé de traitement de données selon l'invention peut être stocké dans le moyen de stockage 15 et exécuté par le moyen de traitement 19 du dispositif de communication 5.

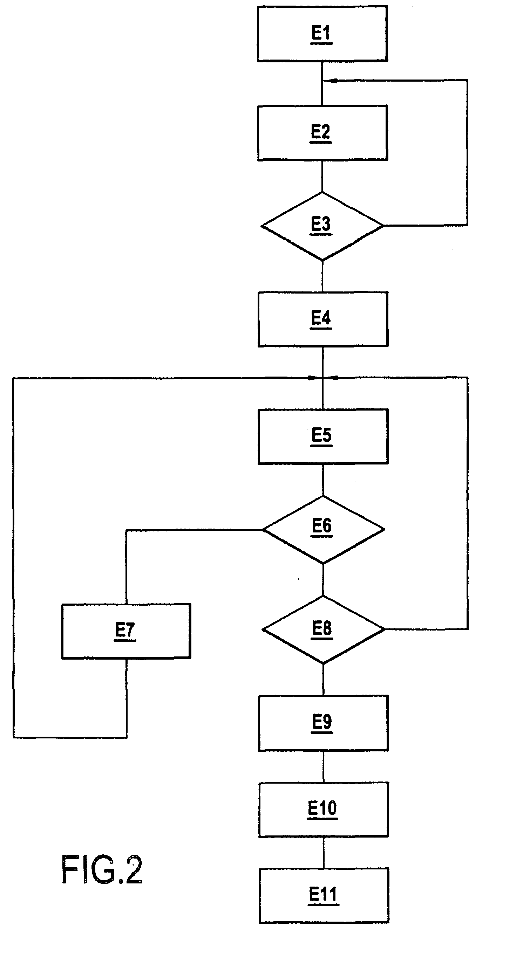

En effet, la figure 2 est un exemple d'un organigramme illustrant les étapes du procédé de traitement de données selon l'invention.

Les étapes E1 à E10 réalisent l'agrégation automatique de données numériques saisies sous la forme manuscrite aux autres données numériques saisies sous une autre forme pour former les données numériques agrégées.

Par ailleurs, l'étape E11 concerne la transmission des données numériques agrégées au serveur 9 de traitement par l'intermédiaire du réseau de communication 7.

En effet, l'étape E1 concerne la lecture dans le moyen 15 de stockage par le moyen de traitement 19, des paramètres prédéterminés définissant les événements de déclenchement, de clôture et de données à agréger. Les étapes E2 à E4 concernent la détection de l'occurrence d'un événement de déclenchement par ces paramètres prédéterminés.

Plus particulièrement, à la réception des données numériques, le moyen de traitement 19 cherche à identifier à l'étape E2, une file d'attente associée à l'événement déclencheur,

L'étape E3 est un test permettant au moyen de traitement 19 de vérifier si les données reçues comportent un fichier ou événement déclenchant le traitement d'agrégation de données.

Si l'issu du test E3 est positif, alors les données de déclenchement sont mémorisées dans le moyen de stockage 15. Sinon, on reboucle à l'étape E2.

Les étapes E5 à E10 concernent la détection de l'occurrence d'un événement de clôture et l'agrégation des données numériques saisies entre l'occurrence des événements de déclenchement et l'occurrence de l'événement de clôture.

En effet, à l'étape E5, le moyen de traitement 19 cherche à identifier les files d'attente associées aux données à agréger et à l'événement de clôture.

L'étape E6 est un test permettant de vérifier si les données comportent un fichier de type agrégation. Cette étape comporte la détection de l'occurrence d'un événement signalant la fin d'une saisie via une ou plusieurs files d'attente préalablement identifiées.

Si l'issu du test E6 est positif, alors on va à l'étape E7 où on mémorise les données à agréger dans le moyen de stockage 15. Sinon, on va à l'étape E8 correspondant à un autre test permettant de vérifier si les données reçues comportent un fichier de type clôture.

Si l'issu du test E8 est négatif, alors on reboucle à l'étape E5. En revanche, si les données comportent un fichier de type clôture, alors on va à l'étape E9 où on mémorise ces données de clôture dans le moyen de stockage 15.

A l'étape E10, on agrège toutes les données numériques saisies entre les événements de déclenchement et de clôture pour former des données agrégées avant leur transmission à étape E11 vers le serveur 9 de traitement. Ce dernier assure ensuite le traitement ou la gestion de ces données agrégées au moyen d'une application développée pour cet usage.

A l'issue de la transmission des données agrégées au serveur de traitement, les données saisies sont de préférence effacées de la mémoire 15 du dispositif de communication en vue d'une nouvelle agrégation.

La figure 3 illustre un mode particulier de réalisation du système 1 de traitement de données appliqué à l'utilisation de bordereaux de livraison pour le transport de colis. Selon cette application, le dispositif de communication 5 peut être un téléphone mobile intégrant un appareil de photographie 3c.

Le moyen de saisie d'écriture sous forme manuscrite 3a peut comporter du papier et stylo électronique ou un tout autre moyen ayant la même fonction. Dans cet exemple, le stylo électronique transmet ses données au dispositif de communication 5 en utilisant une liaison sans fil à la norme Bluetooth. Par exemple, c'est la réception des données transmises par ce périphérique de saisie 3a qui sert de déclencheur à l'application résidant sur le moyen de communication 5 pour la transmission de l'ensemble de données agrégées au serveur 9 de traitement.

Le moyen de saisie d'information d'identification 3b peut comporter un lecteur de codes barres ou d'étiquettes électroniques et peut aussi être relié au dispositif de communication 5 par une liaison sans fil Bluetooth. Par exemple, c'est la réception des données transmises par ce périphérique de saisie 3b qui sert de déclencheur à l'application résidant sur le moyen de communication 5 pour le déclenchement de l'opération d'agrégation de données.

Ainsi, selon cet exemple, le fichier de paramètres stocké dans le moyen de stockage 15 comporte les éléments suivants :
- des données définissant l'événement déclencheur : la file d'attente est « Inbox Bluetooth » et le type de fichier est « code barre » ou «.cb»,
- des données définissant les données à agréger : la file d'attente est « bibliothèque d'image» et le type de fichier est « .jpeg (photos numériques)», et
- des données définissant l'événement terminant l'agrégation: la file d'attente est « Inbox Bluetooth » et le type de fichier est «.pgc».

Alors, lorsqu'un utilisateur saisit l'identifiant d'un colis au moyen du périphérique 3b (lecteur de codes barres) et le transmet au dispositif de communication 5, celui-ci se met en attente de données venant des autres périphériques 3a et 3c. Ensuite, l'utilisateur prend des photos numériques du colis à l'aide du périphérique 3c (appareil de photographie 3c). Celles-ci sont mémorisées par l'application implantée dans le dispositif de communication 5.

Lorsque l'utilisateur valide sur le périphérique 3a (stylo électronique), par exemple en cochant une case prévue à cet effet, les différentes informations saisies dans le bordereau de livraison sont transmises au dispositif de communication 5 sous la forme d'un fichier. Ce fichier correspond à une image du texte saisi sous la forme des coordonnées des points constituant le tracé accompagné d'une information temporelle sur le moment de leur écriture qui permet de reconstituer la dynamique du tracé.

Une fois celui-ci reçu, le dispositif de communication 5 génère un message contenant les données issues des trois périphériques 3a, 3b, 3c et le transmet au serveur 9 sur lequel un logiciel va effectuer un traitement visant, par exemple, à enregistrer la livraison du colis dans le système de l'entreprise de transport de colis en associant les données d'identification de celui-ci, les photos prises et les données saisies sur le bordereau de livraison.

Selon une implémentation préférée, les différentes étapes du procédé selon l'invention sont exécutées au moyen d'instructions de code de programme.

En conséquence, l'invention vise aussi un produit programme d'ordinateur, ce programme étant susceptible d'être mis en oeuvre dans un système informatique, ce programme comportant des instructions de code adaptées à la mise en oeuvre d'un procédé selon l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

## Revendications

1. Procédé de traitement de données comportant les étapes suivantes :
- agrégation de données numériques résultant d'une saisie d'écriture sous forme manuscrite au moyen d'un périphérique de saisie d'écriture manuscrite (3a) à d'autres données numériques saisies au moyen d'au moins un autre périphérique de saisie (3b, 3c) pour former des données numériques agrégées et
- transmission desdites données numériques agrégées à un serveur (9) de traitement par l'intermédiaire d'un réseau de communication (7), le procédé étant **caractérisé en ce que** l'étape d'agrégation comprend :
- lecture préliminaire dans un moyen (15) de stockage de paramètres prédéterminés compris dans un fichier, lesdits paramètres prédéterminés comprenant une définition d'un événement de déclenchement, d'un événement de clôture et de données numériques à agréger,
- détection d'une occurrence dudit événement de déclenchement,
- détection d'une occurrence dudit événement de clôture, et
- agrégation de données numériques, répondant à ladite définition, saisies entre l'occurrence dudit événement de déclenchement et l'occurrence dudit événement de clôture, ladite lecture préliminaire étant réalisée avant lesdites détections d'occurrence et avant l'agrégation de données numériques.

2. Procédé selon la revendication 1, **caractérisé en ce que** l'un au moins des événements de déclenchement et de clôture est défini au moyen d'une identification d'une file d'attente associée à l'un des périphériques de saisie (3a, 3b, 3c) de données.

3. Procédé selon la revendication 1, **caractérisé en ce que** l'un au moins des événements de déclenchement et de clôture est défini au moyen d'une combinaison logique des éléments suivants : identification dudit événement, identification d'une file d'attente de saisie à observer pour la détection de l'occurrence dudit événement, format de fichier généré, et format de données saisies via une file d'attente.

4. Procédé selon l'une quelconque des revendications 1 à 3, **caractérisé en ce qu'**il comporte la détection de l'occurrence d'au moins un événement de fin de saisie de données numériques.

5. Dispositif de traitement de données comportant :
- un module d'agrégation (11) destiné à agréger automatiquement des données numériques résultant d'une saisie d'écriture sous forme manuscrite au moyen d'un périphérique de saisie d'écriture manuscrite (3a) à d'autres données numériques saisies au moyen d'au moins un autre périphérique de saisie (3b, 3c) pour former des données numériques agrégées, et
- un moyen de transmission (13) destiné à transmettre lesdites données numériques agrégées à un serveur (9) de traitement par l'intermédiaire d'un réseau de communication (7), ledit dispositif étant **caractérisé en ce que** le module d'agrégation comprend :
- un moyen de stockage (15) de données comportant un fichier comprenant des paramètres prédéterminés comprenant une définition d'un événement de déclenchement, d'un événement de clôture, et des données numériques à agréger,
- un moyen de lecture (19) préliminaire dans ledit moyen, (15) de stockage desdits paramètres prédéterminés, et
- un moyen de traitement (19) apte à détecter une occurrence dudit événement de déclenchement, à détecter une occurrence dudit événement de clôture, et à agréger lesdites données numériques, répondant à ladite définition, saisies entre l'occurrence dudit événement de déclenchement et l'occurrence dudit événement de clôture, ledit moyen de lecture préliminaire étant configuré pour réaliser une lecture préliminaire desdits paramètres prédéterminés avant lesdites détections d'occurrence et avant l'agrégation de données numériques.

6. Dispositif selon la revendication 5, **caractérisé en ce que** l'un au moins des événements de déclenchement, et de clôture est défini au moyen d'une identification d'une file d'attente associée à l'un des périphériques de saisie (3a, 3b, 3c) de données.

7. Dispositif selon la revendication 5 ou 6, **caractérisé en ce qu'**au moins une partie desdits périphériques de saisie est comprise dans le dispositif.

8. Dispositif selon l'une quelconque des revendications 5 à 7, **caractérisé en ce que** ledit dispositif est un terminal de télécommunication.

9. Système de traitement de données comportant des périphériques de saisie (3) et un dispositif (5) selon l'une quelconque des revendications 5 à 8.

10. Produit programme d'ordinateur comportant des instructions de code de programme pour la mise en oeuvre du procédé de traitement de données selon les revendications 1 à 4 lorsque ledit programme est chargé et exécuté dans un système informatique.

## Patentansprüche

1. Datenverarbeitungsverfahren, das die folgenden Schritte aufweist:
- Aggregation digitaler Daten, die aus einer Eingabe in handschriftlicher Form mittels eines Peripheriegeräts (3a) zur handschriftlichen Eingabe resultieren, mit anderen digitalen Daten, die mittels mindestens eines anderen Eingabe-Peripheriegeräts (3b, 3c) eingegeben werden, um aggregierte digitale Daten zu formen, und
- Übertragung der aggregierten digitalen Daten über ein Kommunikationsnetzwerk (7) an einen Verarbeitungsserver (9),
wobei das Verfahren **dadurch gekennzeichnet ist, dass** der Aggregationsschritt enthält:
- das vorausgehende Lesen in einer Speichereinrichtung (15) von in einer Datei enthaltenen vorbestimmten Parametern, wobei die vorbestimmten Parameter eine Definition eines Auslöseereignisses, eines Schließereignisses und von zu aggregierenden digitalen Daten enthalten,
- die Erfassung eines Eintritts des Auslöseereignisses,
- die Erfassung eines Eintritts des Schließereignisses, und
- die Aggregation von dieser Definition entsprechenden digitalen Daten, die zwischen dem Eintritt des Auslöseereignisses und dem Eintritt des Schließereignisses eingegeben werden, wobei das vorausgehende Lesen vor den Auftrittserfassungen und vor der Aggregation digitaler Daten durchgeführt wird.

2. Verfahren nach Anspruch 1, **dadurch gekennzeichnet, dass** mindestens eines der Auslöse- und Schließereignisse mittels einer Identifizierung einer einem der Dateneingabe-Peripheriegeräte (3a, 3b, 3c) zugeordneten Warteschlange definiert wird.

3. Verfahren nach Anspruch 1, **dadurch gekennzeichnet, dass** mindestens eines der Auslöse- und Schließereignisse mittels einer logischen Kombination der folgenden Elemente definiert wird: Identifizierung des Ereignisses, Identifizierung einer für die Erfassung des Eintritts des Ereignisses zu beachtenden Eingabe-Warteschlange, generiertes Dateiformat und Format von über eine Warteschlange eingegebenen Daten.

4. Verfahren nach einem der Ansprüche 1 bis 3, **dadurch gekennzeichnet, dass** es die Erfassung des Eintritts mindestens eines Ereignisses des Eingabeendes von digitalen Daten aufweist.

5. Datenverarbeitungsvorrichtung, die aufweist:
- ein Aggregationsmodul (11), das dazu bestimmt ist, automatisch digitale Daten, die aus einer Eingabe in handschriftlicher Form mittels eines Peripheriegeräts (3a) zur handschriftlichen Eingabe resultieren, mit anderen digitalen Daten zu aggregieren, die mittels mindestens eines anderen Eingabe-Peripheriegeräts (3b, 3c) eingegeben werden, um aggregierte digitale Daten zu formen, und
- eine Übertragungseinrichtung (13), die dazu bestimmt ist, die aggregierten digitalen Daten über ein Kommunikationsnetzwerk (7) an einen Verarbeitungsserver (9) zu übertragen,
wobei die Vorrichtung **dadurch gekennzeichnet ist, dass** das Aggregationsmodul enthält:
- eine Datenspeichereinrichtung (15), die eine Datei aufweist, welche vorbestimmte Parameter enthält, die eine Definition eines Auslöseereignisses, eines Schließereignisses und der zu aggregierenden digitalen Daten enthalten,
- eine Einrichtung (19) zum vorausgehenden Lesen der vorbestimmten Parameter in der Speichereinrichtung (15), und
- eine Verarbeitungseinrichtung (19), die einen Eintritt des Auslöseereignisses erfassen, einen Eintritt des Schließereignisses erfassen und die der Definition entsprechenden digitalen Daten aggregieren kann, die zwischen dem Eintritt des Auslöseereignisses und dem Eintritt des Schließereignisses eingegeben werden, wobei die Einrichtung zum vorausgehenden Lesen konfiguriert ist, um ein vorausgehendes Lesen der vorbestimmten Parameter vor den Eintrittserfassungen und vor der Aggregation digitaler Daten durchzuführen.

6. Vorrichtung nach Anspruch 5, **dadurch gekennzeichnet, dass** mindestens eines der Auslöse- und Schließereignisse mittels einer Identifizierung einer einem der Dateneingabe-Peripheriegeräte (3a, 3b, 3c) zugeordneten Warteschlange definiert wird.

7. Vorrichtung nach Anspruch 5 oder 6, **dadurch gekennzeichnet, dass** mindestens ein Teil der Eingabe-Peripheriegeräte in der Vorrichtung enthalten ist.

8. Vorrichtung nach einem der Ansprüche 5 bis 7, **dadurch gekennzeichnet, dass** die Vorrichtung ein Telekommunikationsendgerät ist.

9. Datenverarbeitungssystem, das Eingabe-Peripheriegeräte (3) und eine Vorrichtung (5) nach einem der Ansprüche 5 bis 8 aufweist.

10. Computerprogrammprodukt, das Programmcodeanweisungen zur Durchführung des Datenverarbeitungsverfahrens nach einem der Ansprüche 1 bis 4 aufweist, wenn das Programm in ein EDV-System geladen und von ihm ausgeführt wird.

## Claims

1. Method for processing data containing the following steps:
- aggregation of digital data resulting from capture of handwritten writing by means of a handwriting capture peripheral (3a) with other digital data captured by means of at least one other capture peripheral (3b, 3c) to form aggregated digital data and
- transmission of said aggregated digital data to a processing server (9) by way of a communication network (7), the method being **characterized in that** the aggregation step comprises:
- preliminary reading in a means (15) for storing predefined parameters included in a file, said predefined parameters comprising a definition of a trigger event, of a closing event and of digital data to be aggregated,
- detection of an occurrence of said trigger event,
- detection of an occurrence of said closing event, and
- aggregation of digital data answering to said definition and captured between the occurrence of said trigger event and the occurrence of said closing event, said preliminary reading being carried out before said detections of occurrence and before the aggregation of digital data.

2. Method according to Claim 1, **characterized in that** at least one of the trigger and closing events is defined by means of an identification of a queue associated with one of the data capture peripherals (3a, 3b, 3c).

3. Method according to Claim 1, **characterized in that** at least one of the trigger and closing events is defined by means of a logical combination of the following elements: identification of said event, identification of a capture queue to observe for the detection of the occurrence of said event, generated file format, and format of data captured via a queue.

4. Method according to any one of Claims 1 to 3, **characterized in that** it contains the detection of the occurrence of at least one event ending the capture of digital data.

5. Data processing device containing:
- an aggregation module (11) intended to automatically aggregate digital data resulting from capture of handwritten writing by means of a handwriting capture peripheral (3a) with other digital data captured by means of at least one other capture peripheral (3b, 3c) to form aggregated digital data, and
- a transmitting means (13) intended to transmit said aggregated digital data to a processing server (9) by way of a communication network (7), said device being **characterized in that** the aggregation module comprises:
- a data storage means (15) containing a file including predefined parameters comprising a definition of a trigger event, of a closing event and of the digital data to be aggregated,
- a preliminary reading means (19) in said means (15) for storing said predefined parameters, and
- a processing means (19) capable of detecting an occurrence of said trigger event, of detecting an occurrence of said closing event and of aggregating said digital data answering to said definition and captured between the occurrence of said trigger event and the occurrence of said closing event, said preliminary reading means being configured for carrying out preliminary reading of said predefined parameters before said detections of occurrence and before the aggregation of digital data.

6. Device according to Claim 5, **characterized in that** at least one of the trigger and closing events is defined by means of an identification of a queue associated with one of the data capture peripherals (3a, 3b, 3c).

7. Device according to Claim 5 or 6, **characterized in that** at least a portion of said capture peripherals is included in the device.

8. Device according to any one of Claims 5 to 7, **characterized in that** said device is a telecommunications terminal.

9. Data processing system containing capture peripherals (3) and a device (5) according to any one of Claims 5 to 8.

10. Computer program product containing program code instructions for the implementation of the data processing method according to Claims 1 to 4 when said program is loaded and executed in an IT system.
